# EUROPÄISCHE PATENTSCHRIFT

(11) **EP 0 459 195 B1**
(45) Veröffentlichungstag und Bekanntmachung des Hinweises auf die Patenterteilung: **21.08.1996**
(21) Anmeldenummer: 91107596.8
(22) Anmeldetag: 10.05.1991
(51) Int. Cl.: F25D 3/11

(54) **Vorrichtung zum Gefrieren von schütt- und fliessfähigen Stoffen**
Freezing device for pourable and flowing materials
Dispositif de congélation pour des matériaux pulvérulents et coulants

(30) Priorität: 31.05.1990 DE 4017565
(43) Veröffentlichungstag der Anmeldung: 04.12.1991
(73) Patentinhaber: MESSER GRIESHEIM GMBH, D-60547 Frankfurt (DE)
(72) Erfinder: Uwe, Görlich, D-4130 Moers (DE); Günther, Weyermanns, D-4152 Kempen 1 (DE)

(56) Entgegenhaltungen:
- EP-A- 0 109 210
- EP-A- 0 372 354
- US-A- 1 383 418
- US-A- 3 754 559

## Beschreibung

Die Erfindung betrifft eine Vorrichtung zum Gefrieren von schütt- und fließfähigen Stoffen.

Das Gefrieren schütt- und fließfähiger Stoffe geschieht in der Regel so, daß die Stoffe beispielsweise in Form von Tropfen oder als Körner direkt in ein Bad aus einem tiefsiedenden verflüssigten Gas, gewöhnlich Stickstoff, eingeleitet und dort gefroren werden. Zum Transport durch solche Tauchbäder und zur Entnahme der gefrorenen Stoffe aus den Tauchbädern werden Transportbänder verwendet. Eine solche Einrichtung zeigt die DE-PS 37 11 169. Solche Vorrichtungen sind für eine kontinuierliche Produktion in industriellem Maßstab gut geeignet. Insbesondere das Tauchbad mit dem zugehörigen Transportband erfordert jedoch einen großen Raumbedarf. Diese Anlagen werden daher als stationäre Einrichtungen betrieben. Die Reinigung und Sterilisierung der Einrichtungen erfordert einen entsprechend großen Aufwand. Dies gilt auch für solche Anlagen, bei denen der Transport der zu gefrierenden Stoffe gemäß EP-A-0 109 210 mittels einer rotierenden Bandschnecke in einem geneigten Hohlzylinder erfolgt. Diese Anlagen sind daher für Wissenschaft und Forschung weniger geeignet, vielmehr sind für Forschungs- und Entwicklungslaboratorien kleine Anlagen vorzuziehen.

Die EP-A-0 372 354 (Stand der Technik gemäß Artikel 54(3) EPÜ) zeigt eine Vorrichtung zum Gefrieren von schütt- und fließfähigen Stoffen in einem Bad aus einem tiefsiedenden verflüssigten Gas, bei der das Bad im Innern eines isolierten Gehäuses angeordnet ist, welches Öffnungen zum Einleiten des zu frierenden Stoffes, des tiefsiedenden verflüssigten Gases und zur Entnahme des gefrorenen Stoffes besitzt, wobei sich das Bad im Innern eines drehbaren Hohlzylinders befindet, dessen Drehachse schräg gegen die Horizontale geneigt ist, auf dessen Innenwand eine Bandschnecke angebracht ist und über dessen tiefst gelegener Stelle eine Eintragvorrichtung für den zu gefrierenden Stoff angeordnet ist.

Der Erfindung liegt die Aufgabe zugrunde, eine Vorrichtung zum Gefrieren von schütt- und fließfähigen Stoffen durch direkten Kontakt mit einem tiefsiedenden verflüssigten Gas zu schaffen, welche klein und mobil ist und ohne großen Aufwand voll sterilisierbar ist.

Diese Aufgabe ist mit den Merkmalen des Anspruchs 1 gelöst.

Eine vorteilhafte Weiterbildung der Erfindung ist im Unteranspruch angegeben.

An die Stelle eines langgestrecken Tauchbades mit zugehörigem Transportband tritt daher bei der erfindungsgemäßen Vorrichtung ein drehbarer Hohlzylinder, der keine weiteren mechanisch bewegten Teile enthält. Der Transport durch das Bad aus verflüssigtem Gas erfolgt mit Hilfe einer auf der Innenwand des Hohlzylinders angebrachten Bandschnecke. Die Aufenthaltsdauer der zu gefrierenden Stoffe im Bad aus tiefsiedendem verflüssigten Gas wird im wesentlichen durch die Drehzahl des Hohlzylinders bestimmt. Die Aufenthaltsdauer kann somit vorgegeben werden. Dies ermöglicht ein kontrolliertes Einfrieren. Während bei üblichen Tauchbädern mit Transportbändern eine gewisse Mindestgröße aus konstruktiven Gründen nicht unterschritten werden kann, kann die erfindungsgemäße Vorrichtung sehr klein und kompakt ausgeführt werden. Sie kann ohne nennenswerten Aufwand transportiert und in unterschiedlichen Räumen aufgestellt werden. Die gesamte Vorrichtung kann so klein gehalten werden, daß sie zusammen mit dem den Hohlzylinder umgebenden isolierten Gehäuse in einem handelsüblichen Autoklaven sterilisiert werden kann. Da außer dem drehbaren Hohlzylinder keine mechanisch bewegten Teile vorhanden sind, ist sie praktisch verschleißfrei und wenig störanfällig. Sie ist daher für den Forschungs- und Wissenschaftsbetrieb hervorragend geeignet. Sie kann kontinuierlich betrieben werden, ermöglicht aber auch ohne weiteres einen chargenweisen Betrieb wie er gerade in Forschungseinrichtungen oft vorkommt.

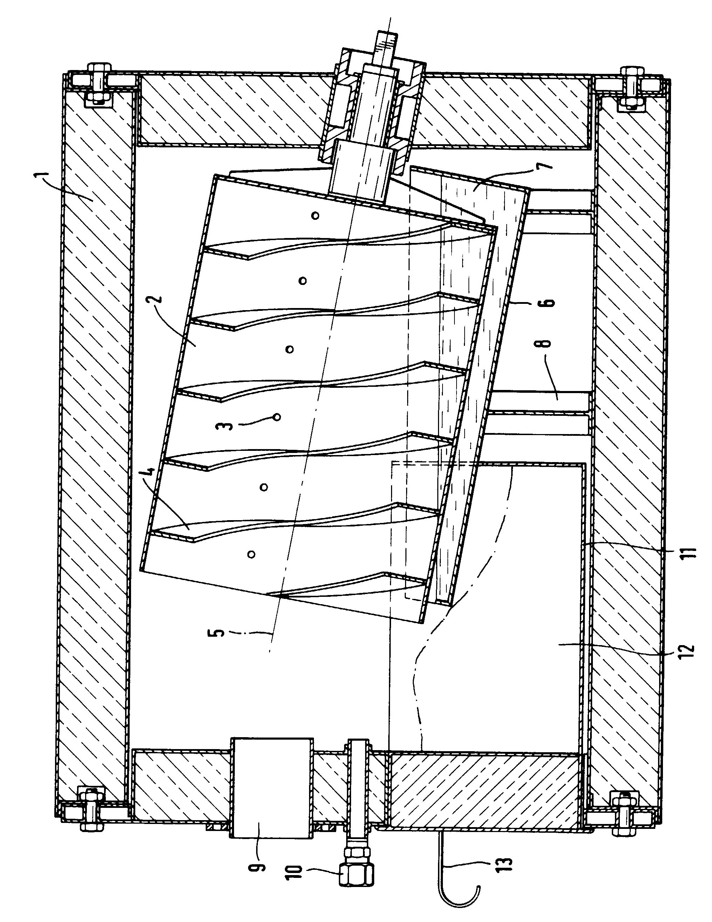

Die Zeichnung zeigt eine in der Praxis realisierte erfindungsgemäße Vorrichtung. Sie besteht aus einem isolierten Gehäuse 1, welches aus Segmenten zusammengesetzt ist, einem drehbaren Hohlzylinder 2, der mit Bohrungen 3 und einer Bandschnecke 4 ausgestattet ist und welcher in dem Gehäuse 1 mit einer schräg gegen die Horizontale geneigten Drehachse 5 angeordnet ist. Die Bandschnecke 4 ist auf der Innenseite des Hohlzylinders 2 befestigt. Der Hohlzylinder 2 steht mit einem Motor in Verbindung, der in der Zeichnung nicht dargestellt ist. Unterhalb des Hohlzylinders 2 ist eine Schale 6 angeordnet, die mit einem Bad 7 aus flüssigem Stickstoff gefüllt ist und welche durch Stützen 8 gehalten wird. Der untere Teil des mit den Bohrungen 3 versehenen Hohlzylinders 2 wird dabei von dem Bad 7 umfaßt. Durch die Bohrungen 3 kann der flüssige Stickstoff in das Innere des Hohlzylinders 2 eindringen. Besonders vorteilhaft bei dieser Ausführungsform ist, daß die Flüssigkeitshöhe im Hohlzylinder 2 auf einfache Weise konstant gehalten werden kann, indem die Flüssigkeitshöhe in der Schale 6 konstant gehalten wird. Hierzu lassen sich bekannte und bewährte Einrichtungen verwenden, welche in der Zeichnung nicht dargestellt sind. Das Gehäuse 1 besitzt eine Öffnung 9, durch die der Hohlzylinder 2 mittels einer in der Zeichnung nicht dargestellten Leitung und Eintragvorrichtung mit dem zu gefrierenden Stoff beschickt werden kann. Die Eintragvorrichtung für den zu gefrierenden Stoff befindet sich vorzugsweise über der tiefsten Stelle des Bades 7. Die Zufuhr für flüssigen Stickstoffs erfolgt durch eine ebenfalls nicht dargestellte Rohrleitung durch den Anschluß 10. Unter der der Öffnung 9 zugewandten Seite des Hohlzylinders 2 befindet sich ein Kasten 11 in den die gefrorenen Pellets 12 gefördert werden können. Der Kasten 11 ist mit einem Handgriff 13 ausgestattet, mit dem er aus dem Gehäuse 1 entnommen werden kann.

Der aus der Eintragvorrichtung in das Bad 7 gelangende zu gefrierende Stoff, beispielsweise Flüssigkeitstropfen, wird im Bad 7 tief gefroren. Die Aufenthaltsdauer im Bad 7 ist im wesentlichen durch die Drehzahl des Hohlzylinders 2 bestimmt. Ein kontrolliertes Gefrieren mit vorbestimmter Gefrierzeit ist daher ohne weiteres möglich. Die Bohrungen 3 ermöglichen dem flüssigen Stickstoff das Durchströmen des Hohlzylinders 2 mit der Bandschnecke 4. Mittels der Bandschnecke 4 gelangt der zu gefrierende Stoff allmählich aus dem Hohlzylinder 2 heraus und wird in Form gefrorener Pellets 12 in dem Kasten 11 aufgefangen. Sobald der Kasten 11 gefüllt oder eine Charge gefroren ist, wird er mit Hilfe des Handgriffs 13 dem isolierten Gehäuse 1 entnommen und weiter verarbeitet. Der verdampfende Stickstoff kann durch die Öffnung 9 entweichen.

Die erfindungsgemäße Vorrichtung ist selbstverständlich nicht auf die Verwendung von flüssigem Stickstoff als Kältemittel angewiesen. So können beispielsweise auch wesentlich tiefer siedende verflüssigte Gase als Kältemittel dienen. Dies ist besonders für Forschungs- und Entwicklungslaboratorien von Vorteil.

## Patentansprüche

1. Vorrichtung zum Gefrieren von schütt- und fließfähigen Stoffen in einem Bad aus einem tiefsiedenden verflüssigten Gas, bei der das Bad im Innern eines isolierten Gehäuses (1) angeordnet ist, welches Öffnungen zum Einleiten des zu frierenden Stoffes, des tiefsiedenden verflüssigten Gases und zur Entnahme des gefrorenen Stoffes besitzt, wobei sich das Bad (7) im Innern eines drehbaren Hohlzylinders (2) befindet, dessen Drehachse (5) schräg gegen die Horizontale geneigt ist, auf dessen Innenwand eine Bandschnecke (4) angebracht ist und über dessen tiefst gelegener Stelle eine Eintragvorrichtung für den zu gefrierenden Stoff angeordnet ist, mit
einer den tiefgelegenen Teil des Hohlzylinders (2) umgebenden Schale (6) zur Aufnahme des tiefsiedenden verflüssigten Gases, welches durch Bohrungen (3) in der Wand des Hohlzylinders (2) mit dessen Innerem in Verbindung steht.

2. Vorrichtung nach Anspruch 1,
gekennzeichnet durch Mittel zum Konstanthalten der Flüssigkeitshöhe in der Schale (6).

## Claims

1. Device for freezing pourable and free-flowing substances in a bath consisting of a low boiling liquified gas, in the case of which the bath is disposed in the interior of an insulated housing (1) which comprises apertures for the introduction of the substance to be frozen and of the low boiling gas, and for removing the frozen substance, whereby the bath (7) is located inside a rotatable hollow cylinder (2) of which the axis of rotation (5) is obliquely inclined towards the horizontal, on the inner wall of which a screw conveyer belt (4) is mounted, and over the deepest point of which a feed device for the substance to be frozen is disposed, with a bowl (6), surrounding the deep section of the hollow cylinder (2), for accommodating the low boiling liquified gas which is connected to the interior of the hollow cylinder (2) by means of bores (9) in the wall thereof.

2. Device according to claim 1,
characterised by means of maintaining the fluid level in the bowl (6) constant.

## Revendications

1. Dispositif de congélation de matériaux pulvérulents et coulants, dans un bain de gaz liquéfié à très basse température d'ébullition, selon lequel le bain est placé à l'intérieur d'un boîtier isolant (1), comportant des ouvertures pour introduire le matériau à congeler, le gaz liquéfié à basse température et pour extraire le matériau congelé, le bain (7) se trouvant à l'intérieur d'un cylindre creux (2), tournant, dont l'axe de rotation (5) est incliné par rapport à la direction horizontale et dont la paroi intérieure comporte une vis en forme de ruban (4) et dont le point situé le plus bas comporte un dispositif d'introduction du matériau à congeler, avec une coquille (6) entourant la partie la plus profonde du cylindre creux (2) pour recevoir le gaz liquéfié à basse température d'ébullition, qui communique par des perçages (3) de la paroi du cylindre creux (2) avec sa partie intérieure.

2. Dispositif selon la revendication 1, caractérisé par des moyens permettant de maintenir constant le niveau de liquide dans la coquille (6).
